# EUROPEAN PATENT SPECIFICATION

(11) **EP 1 347 139 B1**
(45) Date of publication and mention of the grant of the patent: **20.09.2006**
(21) Application number: 03290653.9
(22) Date of filing: 14.03.2003
(51) Int. Cl.: E05F 11/48, B60J 5/04

(54) **Door assembly process**
Verfahren für Türanordnung
Procédé d'assemblage de porte

(30) Priority: 19.03.2002 FR 0203372
(43) Date of publication of application: 24.09.2003
(73) Proprietor: ArvinMeritor Light Vehicle Systems-France, 45600 Sully sur Loire (FR)
(72) Inventor: Chu, Yi-Hwa, 45570 Ouzouer sur Loire (FR); Burkat, Frédéric, 45460 Bouzy la Forêt (FR); Chonavel, Sylvain, 14220 Thury Harcourt (FR); Belmont, Jean-Marc, 45650 St Jean le Blanc (FR); De Vries, Pascal, 45640 Sandillon (FR)
(74) Representative: Hirsch & Associés

(56) References cited:
- EP-A- 0 384 019
- DE-A- 19 611 074
- FR-A- 2 815 994
- US-A- 6 141 910

## Description

The invention relates to car doors and, in particular, to the assembly processes for doors equipped with a window crank.

The Audi company markets under the name A4 a vehicle whose assembly process is as follows:

In a first step, a door frame is taken, which is placed on a jig and to which a motorised double-lift window crank is then fixed. This window crank has cables encased in plastics sheaths. A window glass is next mounted on runs joined to the cables. This assembled aggregate is then slid into the door and fixed thereto.

This process has drawbacks. In particular, the motorised reducer is disposed in a damp zone, which necessitates the use of costly watertight connectors. This process also has drawbacks: the presence of the cable sheaths causes corrosion-induced wear of the cable, especially if the moisture inside the sheaths is poorly evacuated. Furthermore, the sheaths reduce the drive efficiency of the assembled window crank and add to the cost thereof.

EP-A-0 384 019 discloses a device for raising and lowering a window in motor vehicles, having two carriers, guiding positively and slidingly in each case on a guide rail, which are connected to a cable for driving and bear, spaced apart, on a lower edge of the window with their stops, of which carriers at least one carrier has a stop which can variably connected thereto, which stop is provided with a connection part which engages in an opening in the carrier, the connection part having a smaller cross-section than the opening.

DE-A-196 11 074 discloses a device for adjusting a frameless window which is driven by a two-run cable window regulator, by a tilting movement perpendicular to the longitudinal axis of the vehicle with separate adjusting and locking means for each of the two guide rails of the two-run cable window regulator.

There is therefore a need for an assembly process which resolves one or more drawbacks of the prior art. The object of the invention is thus a door assembly process comprising the following steps:
(i) providing a window-glass guide structure, providing a cable circuit, a wedge, a drive member and a drum;
(ii) placement of the wedge between the guide structure and the drum such as to fix the drum on the structure in the longitudinal and vertical directions of an average window-glass guide plane, and winding of the cable onto the drum before or after the placement;
(iii) coupling of the drive member to the wedged drum;
(iv) at least partial fixing of the drive member to an inner panel of the door.

According to one variant, the process additionally comprises a wedge-removal step following fixing of the drive member.

According to another variant, the wedge is placed such as to allow a deflection of the drum in the transverse direction of an average window-glass guide plane.

According to yet another variant, the process additionally comprises a step of inserting the structure between inner and outer door panels after step ii).

The drive member can also be conceived as a motorised reducer fixed in the dry zone of the door.

According to one variant, the drive member is a motorised reducer; the process additionally comprises the following steps:
(a) placement of the cable in deflection pulleys of the structure prior to step ii);
(b) mounting of the motorised reducer pivotally about an axis staggered relative to the rotational axis of the drum, during step iv);
(c) tensioning of the cable by pivoting of the motorised reducer about the staggered axis, prior to any removal of the wedge;
(d) fixing of the motorised reducer to the inner panel of the door after step (c).

According to another variant, the structure comprises a frame provided with a window-glass guide slot; the wedge-placement step comprises the insertion of the wedge in the slot.

According to yet another variant, the wedge-placement step comprises the fixing of the wedge on the structure.

Other characteristics and advantages of the invention can be gleaned by reading the following description of embodiments of the invention, given by way of example with reference to the appended drawings, in which
Figure 1 shows a diagrammatic representation of a door structure;
Figure 2 shows a sectional representation of the structure of Figure 1;
Figure 3 shows a representation of an example of a motorised reducer applied to the invention;
Figure 4 shows a diagram representing a variant of the mounting process;
Figure 5 shows a sectional view from above of a structure provided with a wedge variant;
Figure 6 shows a side view of the structure of Figure 5.

The invention proposes to place a wedge 2 between a window-glass 3 guide structure 1 and a drum 4 in such a way as to immobilise the drum 4 in the longitudinal and vertical directions of an average window-glass guide plane. The wedge 2 is preserved at least until a drive member 5 has been fixed to an inner panel of the door and coupled to the drum 4.

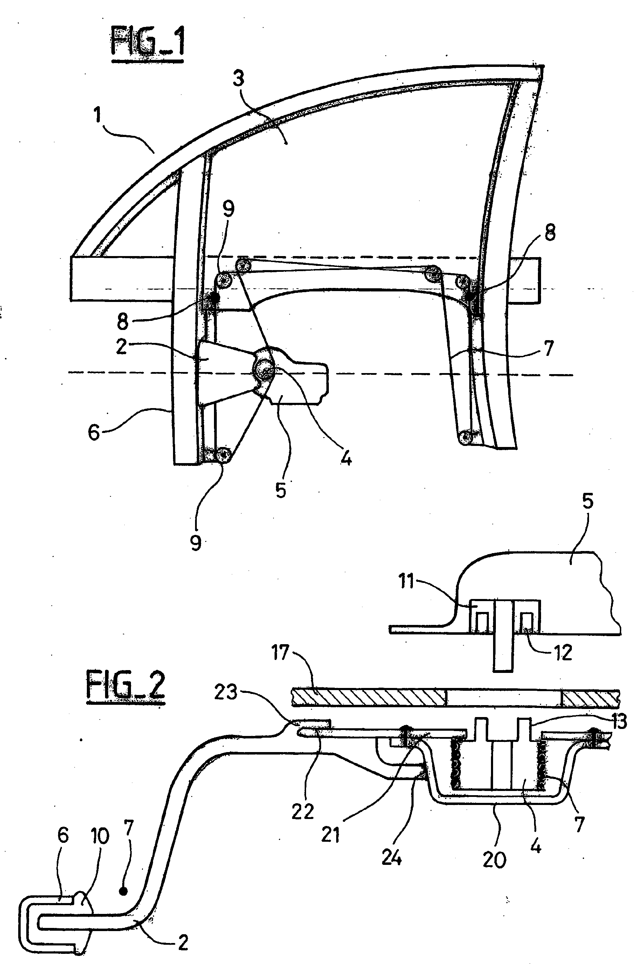

Figure 1 represents an example of a window-glass guide structure constituting a sub-assembly of a door. This door is in the course of assembly in accordance with a process according to the invention. The represented guide structure 1 comprises a guide frame 6 having a window-glass guide slot, such as a window-glass run. A window glass 3 is mounted in sliding arrangement in the guide slot. The window glass 3 is fixed to a cable 7 by fastenings 8 which are known per se. The cable 7 makes a circuit by passing through deflection pulleys 9, which are also realised in a manner which is known per se. The drum 4 is fixed to the structure 1 in the vertical and longitudinal directions of the average window-glass guide plane, using the wedge 2. This securement allows an operator to have a correctly positioned drum for its coupling to a drive member. This wedge 2 thus allows the drum 4 to be safely secured without the use of cable sheaths. The wedge 2 is removable, allowing it to be withdrawn once the drum is immobilised.

The drive member 5 is in this instance a motorised reducer, but a crank-operated manual drive device can equally be envisaged.

The door assembly process comprises, in particular, the following steps.

A window-glass guide structure 1, a cable circuit, a wedge 2 and a drum 4 are provided.

The cable circuit is obtained in the example by means of six deflection pulleys 9 disposed on the guide structure 1. The cable passes through these deflection pulleys, forming a window-glass drive circuit.

The following two steps are then carried out in a chosen order: the wedge 2 is placed between the guide structure 1 and the drum 4 in such a way as to secure the drum in a fixed position in the longitudinal and vertical directions of an average window-glass guide plane and the cable is wound onto the drum.

The wedge having been placed between the guide structure and the drum, the drum is then correctly positioned for subsequent coupling to a drive member 5. Through placement of a wedge between the guide structure and the drum, the case in which a wedge is placed between the structure and an intermediate part disposed between the wedge and the drum is also covered. This intermediate part can, for example, be a drum casing, described further below. On the other hand, once the cable 7 is wound on the drum, the drum is capable of driving the cable.

In the example of Figures 1 and 2, an edge of the wedge is inserted in a window-glass guide slot recessed in the frame 6. The wedge is in this case secured in the slot, either by friction or by elastic deformation, in the longitudinal and vertical directions of an average window-glass guide plane. The window-glass frame of Figure 2 additionally comprises an elastomer window-glass seal 10 particularly suitable for securing the wedge by deformation.

In the example of Figures 1 and 2, the wedge is additionally kept compressed in the slot by a supporting plate 21 for the drum 4. In this case, the cable 7 has been tightened such that the drum 4, by means of its supporting plate 21, applies this compressive force to the wedge. This tension is obtained, for example, by the cable being wound onto the drum. The wedge 2 is thus correctly secured between the window-glass frame and the drum. The guide structure, in the course of assembly, can thus be transported as far as a door assembly bay without harmful displacement of the wedge 2 or of the drum 4.

Next, the coupling of the drive member 5 to the wedged drum 4 is realised. This coupling is effected by any known means. In the example, the drive member is a motorised reducer comprising, as the output member, a rotary-driven damper 11. The damper 11 is provided with radial notches 12. Upon coupling, these radial notches 12 receive studs 13 of the drum 4. A driving torque can thus be transmitted from the motorised reducer to the drum.

A step of at least partially fixing the drive member 5 to an inner panel of the door is then realised. In this instance, the motorised reducer 5 is fixed by three screws in screw threads joined to an inner door panel 17. The casing of the motorised reducer is in this case immobilised on the inner panel. The screws traverse bores 14, 15, 16 made in the casing of the motorised reducer. Suitable seals can, of course, be provided at the level of the screws to ensure water-tightness between the dry zone and damp zone of the door.

This step of at least partial fixing of the drive member having been realised, the wedge 2 is preferably removed from the structure 1. This then provides a guide structure, the assembly of which has been facilitated and which is devoid of sheaths between the drum and the cable deflection pulleys. The previously described drawbacks, due to the use of sheaths, are thus eliminated.

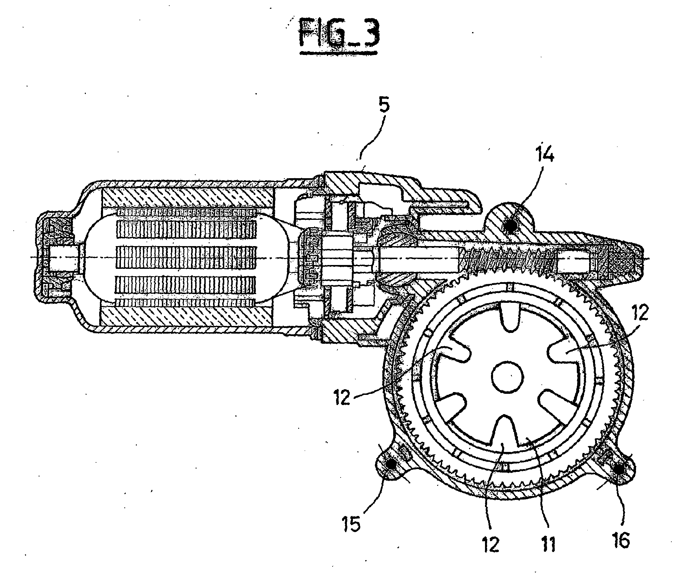

According to an advantageous variant, it is possible to install a wedge which allows deflection of the drum 4 in the transverse direction of the average guide plane of the window glass. This deflection enables an operator easily to re-engage the drum 4 with the motorised reducer 5 in order to effect their coupling. The wedge represented in Figure 3 is thus sufficiently flexible to allow rotation about the vertical axis of its end securing the drum. This flexibility thus allows a deflection to be obtained in the transverse direction.

According to one variant, the structure is inserted in a trough formed between inner 17 and outer panels of the door. The structure can then be fixed to the panels by any suitable known means. This structure-insertion step is realised after the wedge-placement and cable-winding steps and prior to the step of coupling the drive member to the drum. Where the drive member is a motorised reducer, this is preferably fixed in the dry zone as the coupling step is realised. The inner panel 17 and any other suitable element can thus ensure the water-tightness between the motor of the motorised reducer and the surroundings of the drum 4.

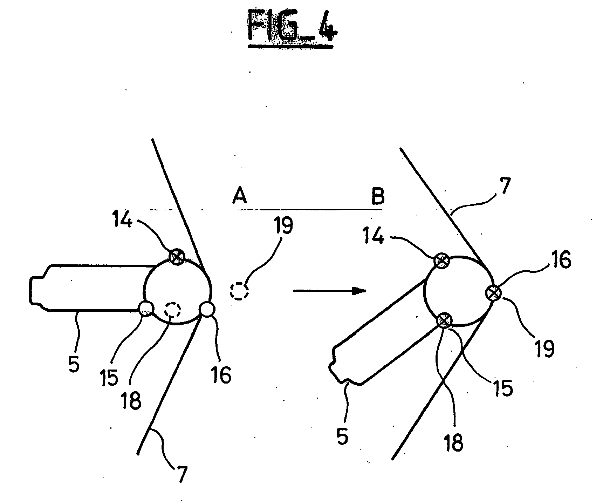

According to a particularly advantageous variant of the assembly process, the motorised reducer 5 is only partially fixed to the inner panel prior to the removal of the wedge 2. According to this process, the cable 7 is placed in the deflection pulleys 9 of the structure prior to the steps of placement of the wedge 2 and winding of the cable 7, such as to realise a cable circuit. During the said step involving partial fixing of the motorised reducer, the motorised reducer is actually pivotally mounted about a staggered axis relative to the rotational axis of the drum. Taking the example of the motorised reducer of Figure 3, only a screw passing through the bore 14 is fixed, this in such a way as to allow pivoting of the motorised reducer about this screw. It can be seen that, at the position A of Figure 4, the bores 15 and 16 of the motorised reducer casing are staggered relative to the corresponding screw threads 18 and 19 for fixing to the panel. Because of the axial stagger, the pivoting of the motorised reducer coupled to the drum affects the tension in the cable. By rotating the motorised reducer into position B, the cable tension is assured. When the bores 15 and 16 are placed opposite the screw threads 18 and 19, the total fixing of the motorised reducer 5 to the panel is assured. Such a step of fixing the motorised reducer 5 to the inner panel thus allows the tension in the cable 7 also to be assured. Owing to a lesser tension in the cable to begin with, the assembly of the door is also facilitated.

In the example of Figure 2, it can be seen that the wedge is bent in such a way as to dispose the drum close to its final transverse position. In addition, the drum 4 is rotary-mounted within a casing. The casing has, on the one hand, a drum housing 20 and a drum supporting plate 21. The drum supporting plate 21 forms a shoulder in relation to the drum housing 20. This plate 21 thus ensures the securement of the drum in the housing 20. In the example, the plate 21 has an elongated part 22 projecting radially outward relative to the drum housing 20. The elongated part 22 is accommodated in a clamp 23 such as to ensure the securement of the drum relative to the wedge 2 in the longitudinal, transverse and vertical directions. This securement can be assured by friction of the elongated part 22 in the clamp 23. The wedge also has an elongated part 24 coming to bear upon the drum housing 20. Better fixing of the drum is therefore assured. A wedge suitable for securing the drum by dint of cable tension can be envisaged. The wedge can also be made to allow rotation of the drum and its housing in order to tighten the cable by rotation of the motorised reducer coupled to the drum, in accordance with the process described with reference to Figure 4.

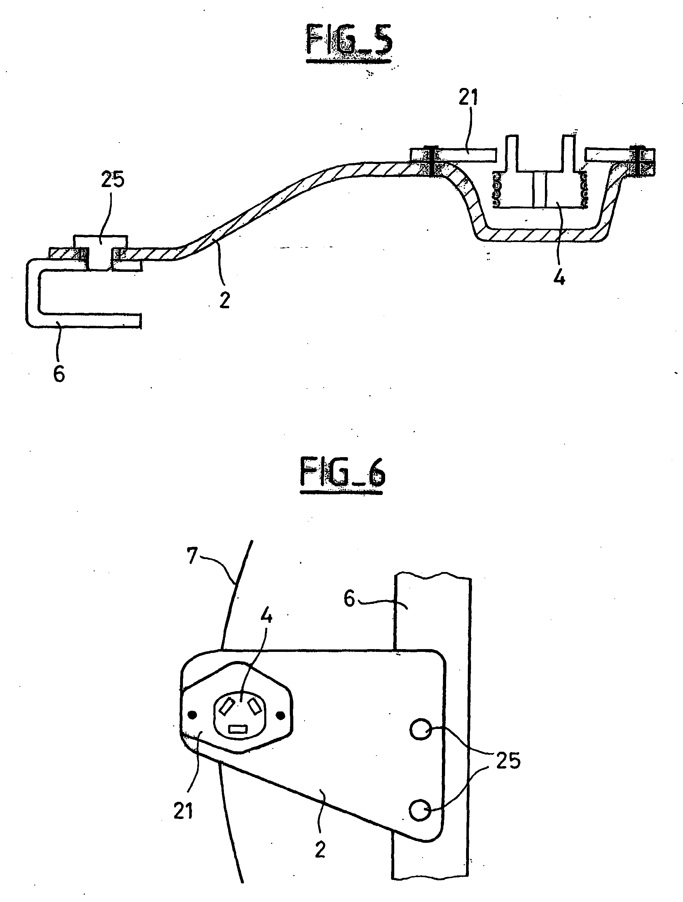

The variant of Figures 5 and 6 has a wedge designed not to be withdrawn after the drive device 5 has been coupled to the drum 4. In the example, the wedge 2 positions itself on the run 6 by studs fixed on the run or screws 25 housed in suitable threaded bores of the run 6. Preferably, the wedge is not fixed rigidly to the run. Thus, the studs or screws are not squeezed to allow the wedge to shift slightly, under the action of a handler, upon the assembly of the drive member. As in the previous examples, this wedge ensures the securement of the drum in a fixed position in the vertical and longitudinal directions of an average window-glass guide plane. This securement also therefore allows an operator to have a correctly positioned drum for its coupling to a drive member 5. Of course, the different variants proposed beforehand, especially as regards the bend of the wedge or the deflection function supplied to the drum in the transverse direction, can equally be applied to this wedge 2.

The variant of Figures 5 and 6 represents a wedge 2 also having an integrated drum housing. A supporting plate 21 is added to the wedge in order to secure the drum in the housing of the wedge. It can also be envisaged to realise the supporting plate 21 within the wedge 2 and to add a housing of the type described with reference to Figures 1 and 2. These variants thus allow a reduction in the number of parts present in the door.

Of course, the present invention is not limited to the examples and embodiments described and represented, but it is subject to numerous variants open to the person skilled in the art. Thus, although the placement of the wedge in a slot in the window-glass guide frame has principally been described, the wedge can also be envisaged placed between a belt-line mask and the drum.

## Claims

1. Door assembly process comprising the following steps:
(i) providing a window-glass (3) guide structure (1, 6), providing a cable circuit (7), a wedge (2), a drive member (5), and a drum (4);
(ii) placement of the wedge (2) between the guide structure (1, 6) and the drum (4) such as to fix the drum on the structure in the longitudinal and vertical directions of an average window-glass guide plane, and winding of the cable onto the drum before or after the placement;
(iii) coupling of the drive member (5) to the wedged drum;
(iv) at least partial fixing of the drive member to an inner panel of the door.

2. The assembly process of Claim 1, **characterised in that** it additionally comprises a wedge-removal step following the step of fixing of the drive member.

3. The assembly process according to Claim 1 or 2, **characterised in that**, at step ii), the wedge is placed such as to allow a deflection of the drum in the transverse direction of an average window-glass guide plane.

4. The assembly process of one of Claims 1 to 3, **characterised in that**, it additionally comprises a step of inserting the structure between inner (17) and outer door panels after step ii).

5. The assembly process of Claim 4, **characterised in that** the drive member is a motorised reducer fixed in the dry zone of the door.

6. The assembly process of one of the preceding claims, **characterised in that**:
- the drive member is a motorised reducer;
- the process additionally comprises the following steps:
(a) placement of the cable in deflection pulleys of the structure prior to step ii);
(b) mounting of the motorised reducer pivotally about an axis staggered relative to the rotational axis of the drum, during step iv);
(c) tensioning of the cable by pivoting of the motorised reducer about the staggered axis, prior to any removal of the wedge;
(d) fixing of the motorised reducer to the inner panel of the door after step (c).

7. The assembly process of one of the preceding claims, **characterised in that**:
- the structure comprises a frame (6) provided with a window-glass guide slot;
- the wedge-placement step comprises the insertion of the wedge in the slot.

8. The assembly process of one of Claims 1 to 6, **characterised in that**:
- the wedge-placement step comprises the fixing of the wedge on the structure.

## Patentansprüche

1. Verfahren zur Montage einer Türe, folgende Schritte umfassend:
(i) Bereitstellen einer Führungsstruktur (1, 6) für eine Fensterscheibe (3), Bereitstellen eines Seilumlaufs (7), einer Verkeilung (2), eines Antriebsteils (5) und einer Trommel (4);
(ii) Einsetzen der Verkeilung (2) zwischen der Führungsstruktur (1, 6) und der Trommel (4), um letztere an der Struktur in der Längs- und Vertikalrichtung einer Führungsmittelebene der Fensterscheibe zu befestigen, und Aufwickeln des Seils auf die Trommel vor oder nach dem Einsetzen;
(iii) Verbinden des Antriebsteils (5) mit der verkeilten Trommel;
(iv) wenigstens teilweises Befestigen des Antriebsteils an einem Innenpaneel der Türe.

2. Montageverfahren nach Anspruch 1, **dadurch gekennzeichnet, dass** es zusätzlich einen Schritt des Entfernens der Verkeilung umfasst, der auf den Schritt des Befestigens des Antriebselements folgt.

3. Montageverfahren nach Anspruch 1 oder 2, **dadurch gekennzeichnet, dass** bei Schritt (ii) die Verkeilung so eingesetzt wird, dass ein Auslenken der Trommel in der Querrichtung der Führungsmittelebene der Fensterscheibe ermöglicht ist.

4. Montageverfahren nach einem der Ansprüche 1 bis 3, **dadurch gekennzeichnet, dass** es zusätzlich einen Schritt umfasst, die Struktur nach Schritt (ii) zwischen einem inneren (17) und äußeren Türpaneel einzubringen.

5. Montageverfahren nach Anspruch 4, **dadurch gekennzeichnet, dass** das Antriebselement ein Getriebemotor ist, der im Trockenbereich der Türe befestigt ist.

6. Montageverfahren nach einem der vorhergehenden Ansprüche, **dadurch gekennzeichnet, dass**:
- das Antriebselement ein Getriebemotor ist;
- das Verfahren zusätzlich die folgenden Schritte umfasst:
(a) Einsetzen des Seils in Umlenkscheiben der Struktur vor Schritt (ii);
(b) während Schritt (iv) den Getriebemotor um eine Achse schwenkbar anzubringen, die bezüglich der Drehachse der Trommel versetzt ist;
(c) Spannen des Seils, indem der Getriebemotor vor Entfernen der Verkeilung um die versetzte Achse geschwenkt wird;
(d) Befestigen des Getriebemotors am Innenpaneel der Türe nach Schritt (c).

7. Montageverfahren nach einem der vorhergehenden Ansprüche, **dadurch gekennzeichnet, dass**:
- die Struktur einen Rahmen (6) umfasst, der mit einem Führungsschlitz für die Fensterscheibe versehen ist;
- der Schritt des Einsetzens der Verkeilung das Einbringen der Verkeilung in den Schlitz umfasst.

8. Montageverfahren nach einem der Ansprüche 1 bis 6, **dadurch gekennzeichnet, dass**:
- der Schritt des Einsetzens der Verkeilung das Befestigen der Verkeilung an der Struktur umfasst.

## Revendications

1. Procédé d'assemblage de porte, comprenant les étapes suivantes consistant :
- à prévoir une structure de guidage (1, 6) de glace (3) de fenêtre, à prévoir un circuit (7) de câble, un coin (2), un organe d'entraînement (5), et un tambour (4) ;
- à mettre en place le coin (2) entre la structure de guidage (1, 6) et le tambour (4) de façon à fixer le tambour sur la structure dans les directions longitudinale et verticale d'un plan moyen de guidage de glace de fenêtre, et à enrouler le câble sur le tambour avant ou après la mise en place ;
- à accoupler l'organe d'entraînement (5) au tambour monté sur le coin ;
- à fixer au moins partiellement l'organe d'entraînement à un panneau intérieur de la porte.

2. Le procédé d'assemblage selon la revendication 1, **caractérisé en ce qu'**il comprend en outre une étape d'enlèvement du coin après l'étape consistant à fixer l'organe d'entraînement.

3. Le procédé d'assemblage selon la revendication 1 ou 2, **caractérisé en ce que**, à l'étape ii), le coin est placé de sorte à permettre un déplacement du tambour dans la direction transversale au plan moyen de guidage de la glace de fenêtre.

4. Le procédé d'assemblage selon l'une des revendications 1 à 3, **caractérisé en ce qu'**il comprend en outre une étape consistant à insérer la structure entre les panneaux de porte intérieur (17) et extérieur après l'étape ii).

5. Le procédé d'assemblage selon la revendication 4, **caractérisé en ce que** l'organe d'entraînement est un réducteur motorisé fixé dans la zone sèche de la porte.

6. Le procédé d'assemblage selon l'une des revendications précédentes, **caractérisé en ce que** :
- l'organe d'entraînement est un réducteur motorisé ;
- le procédé comprend en outre les étapes suivantes consistant :
- à placer le câble dans des poulies de déviation de la structure avant l'étape ii) ;
- à monter le réducteur motorisé pivotant autour d'un axe décalé par rapport à l'axe de rotation du tambour, pendant l'étape iv) ;
- à tendre le câble en faisant pivoter le réducteur motorisé autour de l'axe décalé, avant tout enlèvement du coin ;
- à fixer le réducteur motorisé au panneau intérieur de la porte après l'étape (c).

7. Le procédé d'assemblage selon l'une des revendications précédentes, **caractérisé en ce que** :
- la structure comprend un cadre (6) muni d'une rainure de guidage de glace de fenêtre ;
- l'étape de mise en place du coin comprend l'insertion du coin dans la rainure.

8. Le procédé d'assemblage selon l'une des revendications 1 à 6, **caractérisé en ce que** :
- l'étape de mise en place du coin comprend la fixation du coin sur la structure.
